Europäisches Patentamt

European Patent Office

Office européen des brevets

(11) Publication number: **0 510 852 A1**

## (12) EUROPEAN PATENT APPLICATION

(21) Application number: **92303276.7**

(22) Date of filing: **13.04.92**

(51) Int. Cl.5: **B22C 9/08**, B01D 39/20, B01D 29/03

(30) Priority: **24.04.91 GB 9108797**

(43) Date of publication of application:
**28.10.92 Bulletin 92/44**

(84) Designated Contracting States:
**AT BE DE ES FR GB IT**

(71) Applicant: **FOSECO INTERNATIONAL LIMITED**
**285 Long Acre**
**Nechells Birmingham B7 5JR(GB)**

(72) Inventor: **Stride, Steven**
**69 Ludlow Road, The Poplars**
**Kidderminster, DY10 1NW(GB)**
Inventor: **Siegerist, Walter Thomas**
**76 Goldieslie Road**
**Sutton Coldfield, West Midlands, B73**
**5PG(GB)**

(74) Representative: **Moore, John Hamilton**
**Foseco Holding International Limited Group**
**Patents Department 285 Long Acre Nechells**
**Birmingham B7 5JR(GB)**

(54) Filters for filtering molten metal.

(57) A filter for filtering molten metal comprises a body (2) of reticular ceramic foam having its peripheral surface encased in a rigid frame (1) made of metal or ceramic material and having a thickness of less than 3 mm.

FIG. 2.

EP 0 510 852 A1

This invention relates to filters for filtering molten metal.

It is well known to use open-cell ceramic foams to filter molten metals. Such ceramic foam filters are generally made by impregnating an organic foam, usually polyurethane foam, with an aqueous slurry containing the material which is to form the filter and a binder, removing excess slurry, drying to remove water, and firing the dried impregnated foam to burn off the organic foam to form a ceramic foam.

Using the above method of manufacture individual filters are produced of the required shape and size, or alternatively a large piece of ceramic foam is produced and cut or machined to form individual filters. Both methods of manufacture suffer from disadvantages.

When individual filters of a given nominal size are produced directly from organic foam of a similar size to the filters their dimensional variation is such that problems arise in use, for example in die and permanent mould casting of aluminium and its alloys, in which the filter is inserted in a recess in the die, and in the use of the filters in sand moulds used for casting iron. As oversize filters cannot be used because they cannot be inserted in the recess it is common practice to compensate for the dimensional variations by deliberately making the filter slightly too small for the size of the recess or the recess slightly too large. As a result small gaps remain between the edge of the filter and the wall of the recess, and because metal can penetrate through the gaps and bypass the filter, filtration efficiency is reduced. If the filter is loose, crushing of the filter can occur when the die is closed and this can lead to particles of ceramic material from the filter passing through the filter, and into the casting cavity of the die, thus resulting in inclusions in the casting.

When individual filters are produced from large pieces of ceramic foam by cutting or machining, manufacturing costs are high and productivity rates low, due to the nature of the materials from which the filters have hitherto been made. As the materials are brittle, fracture of the ceramic foam can occur when the foam is cut or machined and dust can be produced.

It is known to use a gasket made from ceramic fibre to surround the surface of a ceramic foam filter which mates with part of the filtration apparatus or with the mould or die in order to fix and seal the filter in position. As the gasket is relatively soft it is not wear resistant and can be damaged during transportation or handling, and fibres can become detached from the gasket and pass through the filtration apparatus or into the mould or die.

It is also known to locate a ceramic foam filter inside a relatively thick section filter carrier made from resin bonded silica sand. However such filter carriers exhibit the same problems as the filters themselves with respect to the carrier being undersize or the recess or print in which the carrier is located being oversize.

It is also known from EP 0410586A that the problems associated with the use of gaskets around filters can be overcome if the gasket is itself surrounded by metallic foil fixed to the outer surface of the gasket.

It has now been found that the problems which arise with the known ceramic foam filters can be overcome by encasing the peripheral surface of the filter in a rigid frame of metal or ceramic material.

According to the invention there is provided a filter for filtering molten metal comprising a body of reticular ceramic foam having a peripheral surface encased in a rigid frame having a thickness of less than 3 mm.

The frame may be made of metal or a ceramic material. The thickness of the metal or ceramic material forming the frame should preferably be not less than 0.2 mm and will usually be no more than 2 mm.

When metal is used to form the frame the particular metal should be chosen so as to be compatible with the metal which is to be filtered through the filter. For example an aluminium frame may be used for filters for aluminium and aluminium alloys, and strip steel which may be coated with a corrosion resistant coating such as tin plate or protected from corrosion in some other way, for example steel strip which is used in canning processes, may be used for the frames for filters for iron. When the filter has a steel frame and is to be used for filtering ferrous metal it is desirable to coat the inside of the frame with a thin layer of a refractory coating in order to prevent carbon from the steel frame being picked up by the molten ferrous metal and to prevent erosion of the frame.

When the frame is made from a ceramic material the material used may be the same or different from the material from which the reticular foam filter itself is formed.

The filters of the invention may be made by impregnating pieces of reticulated organic foam, such as polyurethane foam, with an aqueous slurry containing one or more particulate materials which are to form the filter and a binder, removing excess slurry (for example by squeezing the impregnated organic foam) and then drying and firing the impregnated foam.

Using this method of manufacture filters of a desired shape and configuration produced from organic foam pieces of similar shape and configuration to a pre-determined geometrical size can vary in actual size within a range of approximately ± 1.5 mm of the mean.

When the filter is to be encased in a metal frame the frame may be produced by the following procedure.

Metal strip in the form of a coil is de-coiled through straightening rolls and is cut to the required length. The strip is then bent into an opened-up frame shape and the filter is inserted into the frame. The metal frame is closed and may be lightly pressed into its final shape by a suitable pressing tool or die. The ends of the metal strip forming the frame preferably overlap at a corner, when the filter is of square or rectangular cross-section, and the joint may be closed by means of a lock joint. In the case of a ferrous metal frame the joint may also be formed by spot welding. If desired the frame may be made in such a way that flanges are produced which extend around the operative faces of the filter. This can be done for example by forming the strip into a U-shape by means of multiple rolls, and cutting notches on both arms of the U-shape where subsequent bending will occur. Because of the nature of the outer surface of the frame the filter may be readily labelled, for example with information such as product name, batch number or colour code.

When the frame is to be formed in a ceramic material a ceramic forming mass of dough-like consistency of constituents which are the same as those of the filter or, if not, constituents which are compatible with the filter, may be formed into a strip shape, for example 0.5 to 3 mm thick by 16 mm wide by extrusion through a die. One or more strands of the extruded strip is then formed around the peripheral surface of the filter, which may or may not have been prefired, and cut to the appropriate length. The encased filter is then enveloped by a specially designed die, for example in the case of a square cross-section filter, a die formed of two V-shaped blocks, and the ceramic forming tape frame is pressed on to the peripheral surface of the filter to obtain a keying effect with the filter surface and to accurately produce the required geometrical shape and size. The frame is then dried, for example by hot air or by infra-red drying, to remove all moisture. The drying conditions should be controlled so as to avoid cracking of the frame. Finally the framed filter is fired. As with the metal framed filter the ceramic frame filter has a peripheral surface which can readily be labelled for identification purposes.

The filters having a rigid frame of metal or ceramic material have a number of advantages compared with the filters which are normally used.

Filters of a required nominal size can be produced very accurately to a tolerance of less then ± 0.5 mm and are therefore readily applicable to mechanical handling and mould placement on automatic mould production lines. The texture of the outer surface of the frame can be controlled to suit handling and application. They are less fragile and can therefore be handled and packaged with less risk of damage. The ability to produce flanges in the metal frame which extend around the edge of the operative faces of the filter contributes to the overall improved strength of the filter. In the case of filters having a frame of ceramic material bonding of the frame to the filter improves the transverse strength of the filter.

The invention is illustrated by way of example with reference to the accompanying drawings in which

Figure 1 is a perspective view of a metal frame for producing a filter according to the invention

Figure 2 is a perspective view of a filter encased in the metal frame of Figure 1

Figure 3 is a plan view of a filter according to the invention encased in a frame of ceramic material and

Figure 4 is a vertical section through the filter of Figure 3.

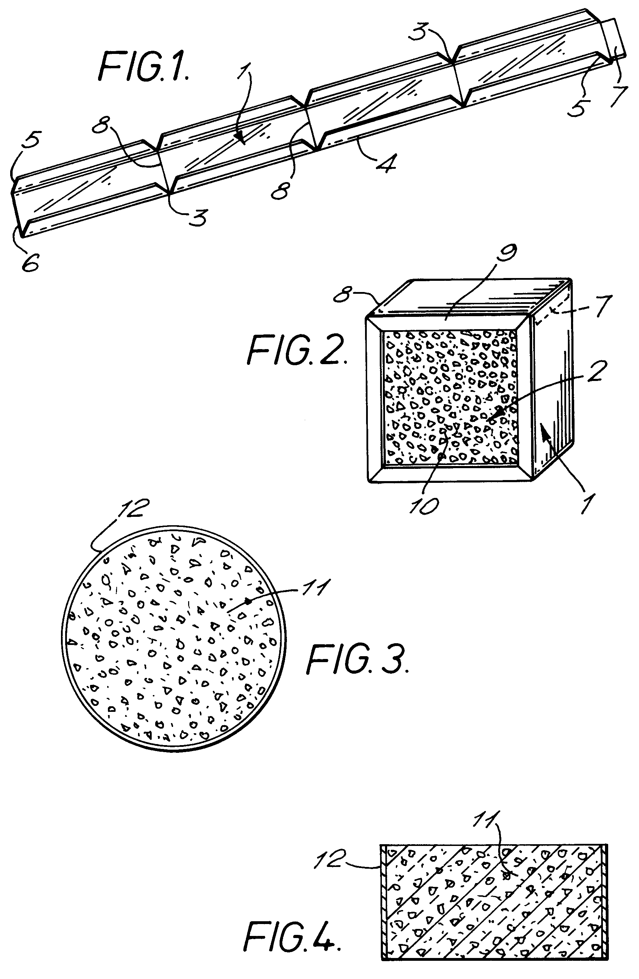

Referring to Figures 1 and 2 a filter consists of a rigid metal frame 1 encasing the peripheral surface of a square section reticular ceramic foam body 2. The frame 1 consists of a strip of tin-plated steel bent into a U-shape. Notches 3 are cut into each arm 4 of the U-shape at three points corresponding to corners of the reticular foam filter 2 and chamfers 5 are cut into one end 6 of the strip and adjacent the other end 7. The peripheral surface of the reticular ceramic foam body 2 is encased in the metal frame 1 by forming bends in the frame 1 at points 8 around the corners of the reticular ceramic foam body 2, and pressing the portions 9 of the arms 4 over the operative faces 10 of the body. End 7 of the frame 1 overlaps with end 6 and a joint can be formed by spot welding the two ends 6, 7 together.

Referring to Figures 3 and 4 a filter consists of a reticular ceramic foam body 11 which is encased in a rigid frame 12 of ceramic material by pressing a moist tape of the ceramic material around the peripheral surface of the body 11 to key the tape to the surface, and then heating the framed body to remove the moisture and finally firing the framed body to produce the rigid frame 12.

**Claims**

1. A filter for filtering molten metal comprising a body of reticular ceramic foam having a peripheral surface characterised in that the peripheral surface is encased in a rigid frame having a thickness of less than 3 mm.

2. A filter according to Claim 1 characterised in that the thickness of the frame is from 0.2 to 2 mm.

3.  A filter according to Claim 1 or Claim 2 characterised in that the frame is made of metal.

4.  A filter according to Claim 3 characterised in that the metal is aluminium or steel.

5.  A filter according to Claim 4 characterised in that the frame is made of steel and the steel is coated with a corrosion resistant coating.

6.  A filter according to Claim 5 characterised in that the coating is tin plate.

7.  A filter according to Claim 4 characterised in that the frame is made of steel and coated on its inside with a refractory coating.

8.  A filter according to Claim 1 or Claim 2 characterised in that the frame is made of ceramic material.

*FIG.1.*

*FIG.2.*

*FIG.3.*

*FIG.4.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 244 414 (THE CARBORUNDUM CO.)<br>* page 7, line 18 - line 21; figure 5 *<br>--- | 1,8 | B22C9/08<br>B01D39/20<br>B01D29/03 |
| Y | EP-A-0 254 557 (NIPPONDENSO CO., LTD.)<br>* page 7, line 16 - line 34 *<br>* page 10, line 57 - line 62; figures 5,38A,B *<br>--- | 1,8 | |
| A | PATENT ABSTRACTS OF JAPAN<br>vol. 13, no. 13 (M-783)(3361) 12 January 1989<br>& JP-A-63 224 854 ( KOBE STEEL LTD. ) 19 September 1988<br>* the whole document *<br>--- | 1,8 | |
| A,D | EP-A-0 410 586 (FOSECO INT. LTD.)<br>* the whole document *<br>----- | 1,3 | |

TECHNICAL FIELDS SEARCHED (Int. Cl.5)

B22C
B01D
C22B

The present search report has been drawn up for all claims

| Place of search | Date of completion of the search | Examiner |
|---|---|---|
| THE HAGUE | 28 JULY 1992 | PLAKA T. |

EPO FORM 1503 03.82 (P0401)